# FASCICULE DE BREVET EUROPEEN

(11) **EP 1 682 360 B1**
(45) Date de publication et mention de la délivrance du brevet: **18.04.2007**
(21) Numéro de dépôt: 04791003.9
(22) Date de dépôt: 29.10.2004
(51) Int. Cl.: B60C 1/00, B60C 11/00

(54) **BANDE DE ROULEMENT AYANT DES ELEMENTS DE SCULPTURE RECOUVERTS D'UN MELANGE EVOLUTIF**
LAUFFLÄCHE MIT DURCH EIN SPEZIFISCHES GEMISCH BEDECKTEN PROFILELEMENTEN
TREAD COMPRISING RELIEF ELEMENTS COVERED BY A SPECIFIC MIXTURE

(30) Priorité: 30.10.2003 FR 0312740
(43) Date de publication de la demande: 26.07.2006
(73) Titulaire: Société de Technologie Michelin, 63000 Clermont-Ferrand (FR); MICHELIN Recherche et Technique S.A., 1763 Granges-Paccot (CH)
(72) Inventeur: CAMBON, Stéphanie, F-63400 Chamalieres (FR); VASSEUR, Didier, F-63100 Clermont-Ferrand (FR)
(74) Mandataire: Diernaz, Christian
(86) Numéro de dépôt international: PCT/EP2004/012239
(87) Numéro de publication internationale: WO 2005/044594

(56) Documents cités:
- EP-A- 1 228 898
- EP-A- 1 228 902
- EP-A- 1 228 903

## Description

L'invention concerne des pneumatiques et plus particulièrement la bande de roulement de tels pneumatiques.

Pour obtenir des performances satisfaisantes en roulage notamment sur chaussée mouillée, il est connu de pourvoir une bande de roulement d'un pneumatique avec une sculpture formée par des éléments de sculpture séparés les uns des autres par des découpures (rainures de largeur moyenne supérieure ou égale à 2.5 mm et/ou incisions de largeur moyenne inférieure à 2.5 mm), ces découpures étant obtenues par exemple par moulage. Les éléments de sculpture ainsi formés comprennent une face de contact destinée à venir en contact avec la chaussée pendant le roulage et des faces latérales délimitant également les découpures ; l'intersection de chaque face latérale avec la face de contact forme une arête facilitant le contact du pneumatique avec la chaussée et notamment lorsque celle-ci est mouillée. Plus généralement, on définit une arête comme la limite géométrique de contact d'un élément de sculpture avec le sol en roulage.

Par éléments de sculpture, on distingue des éléments ne faisant pas le tour complet du pneumatique (blocs) et des éléments faisant le tour complet (nervures). Par ailleurs, les éléments de sculpture peuvent comporter une ou plusieurs incisions pour former des arêtes supplémentaires, chaque incision pouvant ou non déboucher sur au moins une face latérale de l'élément de sculpture. Par définition, une incision est l'espace délimité par deux faces principales en vis-à-vis distantes l'une de l'autre d'une largeur inférieure à 2.5 mm.

Pour améliorer l'adhérence du pneumatique sur une chaussée humide, il est connu que la nature même du mélange de caoutchouc (ou encore appelée : composition de caoutchouc) composant la bande de roulement a une incidence notable. Ainsi, une bande de roulement d'un pneumatique en mélange de caoutchouc ayant une meilleure adhérence sur sol mouillé permet d'obtenir des performances améliorées en roulage dans des conditions de sol mouillé. Toutefois, en parallèle à cette amélioration de performance en adhérence sur sol mouillé, il se produit en règle générale une perte de performance en usure sur route sèche, ce qui se traduit par une durée de vie sur usure réduite et nécessite un changement plus fréquent des pneumatiques sur un véhicule.

Il est connu par le document EP1 228 898 de réaliser une bande de roulement en mélange de caoutchouc de couleur noire comportant au moins dans les rainures un mélange de couleur non noire, ce dernier étant exempt de noir de carbone.

En conséquence, le besoin existe d'un pneumatique dont la bande de roulement conserve une bonne performance en durée de vie sur usure tout en améliorant sensiblement la performance d'adhérence sur sol mouillé.

Dans ce but, il est proposé une bande de roulement en caoutchouc comprenant :
- une pluralité d'éléments de relief (nervure et/ou bloc) comprenant au moins une face latérale et une face de contact destinée à être en contact suivant une surface de contact avec la chaussée pendant le roulage d'un pneumatique pourvu de ladite bande, la limite de la surface de contact de la face de contact avec le sol formant au moins une arête,
- une pluralité de découpures sous la forme de rainure et/ou incision, lesdites découpures étant délimitées par des faces latérales en vis-à-vis,
- chaque élément de sculpture étant formé principalement avec au moins un premier mélange de caoutchouc (dit "mélange de base"),
cette bande de roulement étant par ailleurs caractérisée en ce que, vue en coupe dans un plan contenant l'épaisseur de cette bande, au moins une face de hauteur H délimitant au moins une découpure est recouverte au moins en partie avec un deuxième mélange de caoutchouc, dit "mélange de recouvrement", cette partie en mélange de recouvrement s'étendant sur une hauteur Hr au moins égale à 30% de la hauteur H de la face, au moins un mélange de base débouche sur la face de contact à l'état neuf ou au plus tard après une usure au plus égale à 10% de la hauteur Hr, le mélange de base ayant un taux de noir de carbone supérieur à 2 pce (parties en poids pour cent parties d'élastomère) et le mélange de recouvrement n'étant pas dépourvu de noir de carbone, le taux de noir de carbone dudit mélange de recouvrement étant supérieur à 0 pce et inférieur ou égal à 2 pce.

La composition de caoutchouc formant le mélange de recouvrement a pour caractéristique essentielle de n'être pas totalement dépourvu de noir de carbone. Grâce à un faible taux de noir de carbone, c'est-à-dire un taux compris entre 0 pce et 2 pce, il est encore possible d'éviter une fissuration de surface *("faïençage")* conduisant à une amélioration de l'esthétique visuelle des sculptures même après un certain temps d'utilisation. Cette différence essentielle distingue l'invention des solutions de l'art antérieur (EP 1228898, EP 1228903, EP 1228902) selon lesquelles il était préconisé de ne pas incorporer de noir de carbone *("exclusive of carbon black")* dans la composition des mélanges de recouvrement.

Le taux de noir du mélange de recouvrement est préférentiellement compris entre 0,1 et 1,0 pce, encore plus préférentiellement compris entre 0,1 et 0,5 pce.

Il a été constaté, de manière surprenante, que la mise en oeuvre d'une quantité de noir de carbone dans ce domaine très étroit de concentration, dans lequel la fonction d'agent de coloration noire reste encore active mais plus la fonction d'agent anti-UV, conduisait, après une exposition au rayonnement UV (photo-oxydation) des faces latérales des éléments de sculpture, à une augmentation sensible de l'adhérence sur route mouillée des éléments de sculpture comportant ledit mélange de recouvrement, et celle de la bande de roulement elle-même.

Comme noirs de carbone conviennent tous les noirs de carbone susceptibles d'apporter une coloration noire aux compositions de caoutchouc, notamment les noirs du type HAF, ISAF et SAF connus de l'homme du métier et conventionnellement utilisés dans les pneumatiques, par exemple les noirs de carbone renforçants des séries (grades ASTM) 100, 200 ou 300 typiquement utilisés dans les bandes de roulement de ces pneumatiques (par exemple N115, N134, N234, N326, N330, N339, N347, N375), comme ceux du type non-renforçants (car moins structurés) des séries plus élevées 400 à 700 (par exemple les noirs N660, N683, N772).

On pourrait aussi utiliser à titre d'exemple des noirs non-renforçants dits "noirs d'encre" utilisés comme pigments noirs dans les encres d'imprimerie, les peintures.

Les noirs de carbone peuvent être utilisés à l'état isolé, tels que disponibles commercialement, ou sous tout autre forme, par exemple comme support de certains des additifs de caoutchouterie utilisés.

Les compositions de caoutchouc formant le mélange de recouvrement et le mélange de base sont toutes deux à base d'au moins un élastomère diénique et d'une charge renforçante, cette dernière pouvant être du noir de carbone et/ou une charge inorganique renforçante, aux précisions près qui sont apportées en ce qui concerne leurs taux respectifs de noir de carbone.

Par élastomère (ou caoutchouc) "diénique", on entend de manière connue un élastomère issu au moins en partie (i.e. un homopolymère ou un copolymère) de monomères diènes (monomères porteurs de deux doubles liaisons carbone-carbone, conjuguées ou non). Ces élastomères diéniques peuvent être classés dans deux catégories : "essentiellement insaturés" ou "essentiellement saturés".

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles). C'est ainsi, par exemple, que des élastomères diéniques tels que les caoutchoucs butyl ou les copolymères de diènes et d'alpha-oléfines type EPDM n'entrent pas dans la définition précédente et peuvent être qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique (qu'il soit de type essentiellement insaturé ou essentiellement saturé) susceptible d'être mis en oeuvre dans les mélange de base et de recouvrement :
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone ;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène ;
(d) un copolymère d'isobutylène et d'isoprène (caoutchouc butyl), ainsi que les versions halogénées, en particulier chlorées ou bromées, de ce type de copolymère.

Selon un mode préférentiel de l'invention, l'élastomère diénique est choisi dans le groupe constitué par les polybutadiènes (BR), les polyisoprènes (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

En particulier, lorsque la bande de roulement est par exemple destinée à un pneumatique pour véhicule de type tourisme, l'élastomère diénique est majoritairement (c'est-à-dire pour plus de 50 pce) un SBR, qu'il s'agisse d'un SBR préparé en émulsion ("ESBR") ou d'un SBR préparé en solution ("SSBR"), ou un coupage (mélange) SBR/BR, SBR/NR (ou SBR/IR), ou encore BR/NR (ou BR/IR). Dans le cas d'un élastomère SBR, on utilise notamment un SBR ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg (température de transition vitreuse mesurée selon ASTM D3418-82) comprise entre -20°C et -55°C ; un tel SBR peut être avantageusement utilisé en mélange avec un BR possédant de préférence plus de 90% de liaisons cis-1,4.

Selon un autre mode de réalisation particulièrement préférentiel, l'élastomère diénique est majoritairement (pour plus de 50 pce) un élastomère isoprénique, en particulier lorsque la bande de roulement de l'invention est destinée à un pneumatique pour véhicule industriel tel que poids-lourd. Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). En particulier, cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

La composition de caoutchouc formant le mélange de base a pour caractéristique de comporter un taux de noir de carbone supérieur à 2 pce : lorsque le noir de carbone constitue la charge renforçante majoritaire, ce taux de noir peut varier dans de larges limites connues de l'homme du métier, notamment entre 30 et 150 pce, et préférentiellement entre 40 et 130 pce.

Toutefois, selon un mode préférentiel de réalisation de l'invention, mélange de base et mélange de recouvrement comportent tous deux une charge inorganique à titre de charge renforçante, ainsi qu'un agent de couplage assurant de manière connue la liaison ou couplage entre la charge inorganique et l'élastomère. Cette charge inorganique renforçante est de préférence majoritaire, c'est-à-dire qu'elle représente dans les deux types de mélange plus de 50% en poids de la charge renforçante totale utilisée.

Dans ce mode préférentiel de réalisation, la quantité de noir de carbone dans le mélange de base est préférentiellement comprise dans un domaine de 5 à 20 pce, plus préférentiellement encore dans un domaine de 5 à 10 pce ; dans les intervalles indiqués, on bénéficie des propriétés spécifiques du noir de carbone (pigmentation et anti-UV), sans pénaliser par ailleurs les performances typiques apportées par la charge inorganique renforçante (résistance au roulement diminuée, adhérence améliorée). Le noir de carbone est alors avantageusement choisi parmi les noirs de carbone renforçants précédemment cités des séries (grades ASTM) 100, 200 ou 300.

Par "charge inorganique renforçante", doit être entendue ici, de manière connue, toute charge inorganique ou minérale, quelles que soient sa couleur et son origine (naturelle ou de synthèse), encore appelée charge "blanche" ou parfois charge "claire" ou encore charge "non-noire" *("non-black filler*") par opposition au noir de carbone, capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique pour bande de roulement ; une telle charge se caractérise généralement, de manière connue, par la présence de groupes hydroxyle (-OH) à sa surface.

Préférentiellement, la charge inorganique renforçante est une charge du type siliceuse, telle que silice (SiO₂) par exemple, ou alumineuse telle qu'alumine (Al₂O₃). On pourra utiliser avantageusement toute silice renforçante connue de l'homme du métier, notamment une silice précipitée du type hautement dispersible (dite "HDS") ayant préférentiellement une surface spécifique BET comprise entre 60 et 350 m²/g. De préférence, le taux de charge inorganique renforçante est supérieur à 50 pce, en particulier compris entre 60 et 140 pce, plus préférentiellement encore compris dans un domaine allant de 70 à 130 pce notamment lorsque la bande de roulement est destinée à un pneumatique pour véhicule tourisme.

Les agents de couplage (charge inorganique - élastomère diénique) sont bien connus de l'homme du métier. On peut utiliser tout agent de couplage susceptible d'assurer efficacement, dans les compositions de caoutchouc utilisables pour la fabrication de bandes de roulement de pneumatiques, la liaison entre une charge inorganique renforçante telle que silice et un élastomère diénique, en particulier des organosilanes ou des polyorganosiloxanes au moins bifonctionnels. On utilise à titre d'exemple un polysulfure de bis-hydroxysilylpropyle ou de bis-alkoxyl(C₁-C₄)silylpropyle comme par exemple le le tétrasulfure de bis(3-triéthoxysilylpropyl), en abrégé TESPT. La teneur en agent de couplage est préférentiellement comprise entre 4 et 12 pce, plus préférentiellement comprise entre 3 et 8 pce.

Outre les constituants de base précédemment décrits, les mélange de base et mélange de recouvrement comportent tout ou partie des additifs usuels employés dans les compositions de caoutchouc destinées à la fabrication de bandes de roulement, comme par exemple des plastifiants ou des huiles d'extension, que ces derniers soient de nature aromatique ou de nature non-aromatique, des pigments, des agents de protection tels que cires anti-ozone, anti-ozonants chimiques, anti-oxydants, des agents anti-fatigue, des résines renforçantes, un système de réticulation à base soit de soufre, soit de donneurs de soufre et/ou de peroxyde et/ou de bismaléimides, des accélérateurs de vulcanisation, des activateurs de vulcanisation. Ces compositions peuvent également contenir, en complément des agents de couplage, des activateurs de couplage ou des agents de recouvrement de la charge inorganique renforçante.

Ces compositions comportent, à titre d'agent plastifiant préférentiel (non aromatique ou très faiblement aromatique), au moins un composé choisi dans le groupe constitué par les huiles naphténiques, paraffiniques, huiles MES, huiles TDAE, les esters (en particulier trioléates) de glycérol, les résines plastifiantes hydrocarbonées présentant de préférence une valeur élevée de Tg (de préférence supérieure à 30°C), et les mélanges de tels composés.

Préférentiellement, l'épaisseur totale de mélange de recouvrement sur des faces latérales recouvertes et opposées d'un même élément de relief est au plus égale à 50% de la distance moyenne séparant lesdites faces latérales ; par faces latérales opposées d'un même élément de relief, on entend des faces latérales sensiblement de même direction.

Préférentiellement, et pour avoir un effet perceptible sur le pneumatique neuf, le mélange de recouvrement d'au moins une face est disposé à partir de la face de contact à l'état neuf en direction du fond de la découpure délimitée par ladite face.

Préférentiellement, l'épaisseur de mélange de recouvrement est au moins égale à 0,2 mm sur au moins 80% de la hauteur Hr. Encore plus préférentiellement, l'épaisseur de mélange de recouvrement est au moins égale à 0.2 mm et au plus égale à 3 mm, sur au moins 80% de la hauteur Hr, et encore plus avantageusement comprise entre 0.2 mm et 2 mm, sur au moins 80% de la hauteur Hr.

Par distance moyenne séparant deux faces latérales opposées, on entend la moyenne des distances séparant lesdites faces latérales, ces distances étant mesurées perpendiculairement auxdites faces latérales considérées.

Par épaisseur moyenne de mélange de recouvrement sur une face, on entend la moyenne des épaisseurs maximale et minimale de mélange de recouvrement, étant entendu que ces épaisseurs sont mesurées sur le pneumatique à l'état initial perpendiculairement à la face considérée.

Par distance moyenne séparant une découpure (rainure, incision) considérée de sa plus proche découpure qui lui est sensiblement parallèle, on entend la moyenne des distances maximale et minimale séparant lesdites découpures.

Le pneumatique selon l'invention permet de manière surprenante d'obtenir un bon équilibre entre la performance d'usure sur sol sec et la performance d'adhérence sur sol mouillé. En effet, s'il était connu, pour obtenir un pneumatique performant sur sol enneigé, de former des éléments de relief dans un premier mélange de base et de recouvrir les faces latérales de ces éléments avec une couche de faible épaisseur dans un mélange ayant une température de transition vitreuse moyenne Tg inférieure à celle du mélange de base (voir par exemple le brevet US 5 840 137), aucun document ne décrivait ni ne suggérait la solution proposée.

Le matériau de recouvrement peut être disposé sur les faces latérales d'éléments de relief en vis-à-vis et délimitant une même découpure en recouvrant ou non le fond de ladite découpure.

Avantageusement, toutes les faces latérales des éléments de reliefs délimitant des rainures d'orientation générale circonférentielle sont pourvues d'un mélange de recouvrement ayant un taux de noir de carbone supérieur à 0.05 pce et au plus égal à 2 pce et d'un mélange de base ayant un taux de noir de carbone supérieur à 2 pce afin d'améliorer très sensiblement les performances en régime de virage (sous sollicitations transversales) sur sol mouillé ou rendu glissant. Bien entendu, on peut employer, selon par exemple l'orientation des rainures d'une même bande de roulement, différents mélanges de recouvrement en combinaison avec un mélange de base (voire même plusieurs mélanges de base) ; dans ce cas, chaque mélange de recouvrement a un taux de noir de carbone supérieur à 0.05 pce et au plus égal à 2 pce et chaque mélange de base qui lui est directement adjacent a un taux de noir de carbone supérieur à 2 pce.

On sait que pour différentes raisons, et en particulier à cause de l'évolution des propriétés du matériau avec l'usage et le temps, le niveau d'adhérence sur sol mouillé du pneumatique peut diminuer progressivement, quand bien même le matériau est homogène initialement dans l'épaisseur de la bande de roulement. Pour pallier cet inconvénient, il est intéressant, en combinaison avec les dispositions de l'invention, de prévoir la présence d'un deuxième mélange de base plus adhérent sur sol mouillé que le premier mélange de base et dont la disposition au sein des éléments de relief est telle que ce deuxième mélange apparaît progressivement en largeur sur la face de contact desdits éléments, ou plus généralement apparaît progressivement sur la largeur de la surface de roulement de la bande de roulement au fur et à mesure de l'usure de cette bande. Selon une autre variante avantageuse, le deuxième mélange peut être identique au mélange de recouvrement.

L'invention a également pour objet l'utilisation d'une telle bande de roulement pour la fabrication de pneumatiques neufs ou le rechapage des pneumatiques usagés.

L'invention a également pour objet ces pneumatiques eux-mêmes lorsqu'ils comportent une bande de roulement conforme à l'invention.

D'autres caractéristiques et avantages de la présente invention ressortent de la description faite ci-après en référence aux dessins annexés, sur lesquels :
- la figure 1 représente une vue partielle en plan d'une sculpture à blocs d'une bande de roulement ;
- la figure 2 montre les blocs de la figure 1 en coupe transversale selon la ligne de coupe II-II.

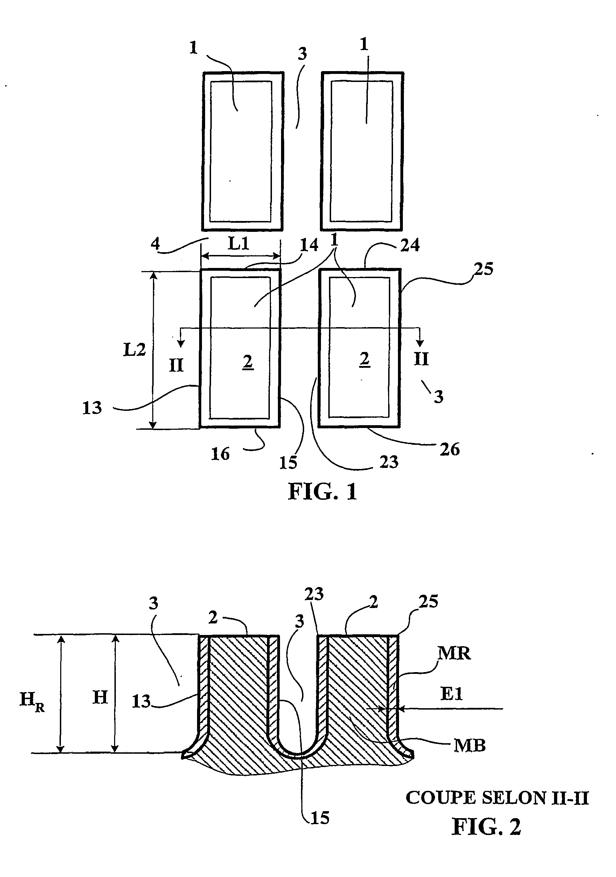

Sur la figure 1, on distingue des faces de contact 2 de blocs 1 de forme rectangulaire d'une sculpture de bande de roulement selon l'invention, lesdits blocs 1 étant délimités par des rainures d'orientation longitudinale 3 et transversale 4. Chacun de ces blocs 1 comporte quatre faces latérales 13, 14, 15, 16 dont les intersections avec la face de contact 2 forment, respectivement, des arêtes 23, 24, 25, 26 qui jouent un rôle important en roulage et en particulier sur chaussée rendue glissante (notamment par la présence d'eau). Chaque bloc 1 est de forme rectangulaire de largeur L1 et de longueur L2 ; la direction de la longueur L1 des blocs étant dans le cas décrit confondue avec la direction longitudinale de la bande de roulement ou encore la direction circonférentielle sur le pneumatique pourvu de ladite bande.

Les quatre faces latérales 13, 14, 15, 16 sont recouvertes en totalité avec une épaisseur E1 (visible sur la figure 2) sensiblement constante (sur toute la hauteur Hr de recouvrement, dans le cas présent égale à la profondeur H des rainures) d'une composition de caoutchouc de recouvrement MR différente d'une composition de caoutchouc MB (dite composition de base dans ce qui suit) en ce que ces deux compositions de caoutchouc comprennent du noir de carbone selon des taux différents : le taux de noir de carbone du mélange de recouvrement MR est compris entre 0.05 pce et au plus 2 pce tandis que celui du mélange de base MB est supérieur à 2 pce.

Sur la coupe transversale représentée à la figure 2 et réalisée selon la ligne II-II de la figure 1 et perpendiculaire aux faces de contact 2 de deux blocs 1, on voit que les faces latérales 13 et 15 limitant les rainures d'orientation longitudinale 3 sont en totalité recouvertes d'une épaisseur E1 sensiblement constante d'une composition de caoutchouc de recouvrement MR qui se prolonge sur le fond des découpures 3.

L'épaisseur moyenne E1 du recouvrement MR des faces latérales est inférieure à la demi largeur totale L1 des blocs et préférentiellement inférieure à 30% de la largeur L1 des blocs 1. Préférentiellement, les sommes des épaisseurs des recouvrements de deux faces latérales opposées dans la direction de la largeur (13, 15) et dans celle de la longueur (14, 16) sont respectivement inférieures à 50% de la largeur L1 et à 50% de la longueur L2.

Bien que l'effet technique de l'invention puisse être obtenu de manière surprenante avec de faibles épaisseurs de recouvrement (par exemple, inférieure ou égale à 0.1 mm), il est préférable pour obtenir un effet sensible et durable dans le temps, que cette épaisseur moyenne soit au moins égale à 0.2 mm dans le cas d'une sculpture destinée à une bande de roulement d'un pneumatique pour véhicule de tourisme.

On donne dans le tableau annexé (taux des différents produits exprimés en pce) deux exemples de compositions de caoutchouc utilisables, respectivement, comme mélange de base (composition C-1) et mélange de recouvrement (composition C-2). Il s'agit de deux compositions à base d'élastomères diéniques SBR et BR connus, renforcées par de la silice et comportant une faible ou très faible quantité de noir de carbone, préparées selon des techniques conventionnelles bien connues de l'homme du métier qui ne sont pas décrites ici dans un souci de simplification de l'exposé.

Dans la composition C-1, le noir de carbone est utilisé, au taux indiqué de 6 pce, essentiellement comme agent de pigmentation noire et agent anti-UV, conformément à l'enseignement de l'état de la technique.

Dans la composition C-2, le noir de carbone au très faible taux indiqué de 0.3 pce remplit certes encore sa fonction d'agent de pigmentation noire, mais ne remplit plus celle d'un agent anti-UV efficace, sa contribution au renforcement étant par ailleurs négligeable.

La composition C-2 possède ainsi une très faible résistance à la photo-oxydation, en d'autres termes une photo-oxydabilité élevée, comparativement à celle de la composition C-1, que l'on suppose *a posteriori,* c'est tout du moins ce que semblent démontrer les essais de roulage de pneumatiques, comme étant favorable à l'adhérence sur route mouillée après une ultime étape de photo-oxydation de la composition C-2 disposée sur les faces latérales des éléments de relief. On suppose en effet que cette adhérence améliorée serait liée à une modification des caractéristiques de la composition en surface par oxydation, favorable à un meilleur accrochage du pneumatique sur sol mouillé. Ladite étape de photo-oxydation peut consister en une simple exposition naturelle au rayonnement UV-visible ou en un vieillissement artificiel, par exemple à l'aide d'une lampe UV ou encore dans une enceinte de photo-vieillissement accéléré.

Les compositions C-1 et C-2 précédemment décrites ont été utilisées dans des bandes de roulement de pneumatiques tourisme à carcasse radiale notés respectivement P-1 et P-2, de dimension 195/65 R 15 (indice de vitesse H), conventionnellement fabriqués et en tous points identiques hormis les compositions de caoutchouc constitutives desdites bandes de roulement.

La composition C-1 forme l'intégralité de la bande de roulement des pneumatiques P-1 (pneumatiques de référence) ainsi que le mélange de base de la bande de roulement des éléments de relief des pneumatiques P-2 conformes à l'invention, tandis que la composition C-2 constitue le mélange de recouvrement des faces latérales de tous les éléments de relief des pneumatiques P-2 selon l'invention (à l'image de ce qui a été décrit avec le support des figures 1 et 2). Ce mélange de recouvrement a une épaisseur de l'ordre de 0,2 mm sur au moins 80% de la hauteur de recouvrement Hr. Les pneumatiques P-2 reprennent sensiblement la structure décrite avec le support des figures 1 et 2.

Après fabrication, les pneumatiques P-2 ont été soumis à un vieillissement UV (exposition naturelle au rayonnement ultraviolet et visible) d'une durée de trois jours. Pour ce traitement aux UV, les pneumatiques ont été exposés à l'extérieur, en position statique, selon une orientation sud (site méditerranéen ensoleillé avec température moyenne de jour de 15°C), ces pneumatiques subissant une rotation autour de leur axe de 1/3 de tour chaque jour, de manière à exposer complètement leur bande de roulement.

Tous les pneumatiques ont été ensuite montés à l'avant d'un véhicule automobile (Renault modèle Laguna - pression avant et arrière de 2,0 bars) équipé d'un système de freinage ABS, pour être soumis à un test de freinage sur route mouillée consistant à mesurer la distance nécessaire pour passer de 50 km/h à 10 km/h lors d'un freinage brutal sur un sol arrosé (béton bitumineux).

Dans les conditions énoncées ci-dessus, on a constaté, de manière inattendue, que la distance de freinage était réduite de 18% pour le véhicule équipé des pneus P-2 selon l'invention, comparativement au même véhicule équipé de pneumatiques de référence P-1. Ce résultat est d'autant plus inattendu et surprenant que la surface totale de mélange de recouvrement (composition C-2) en contact avec le sol mesurée sur une empreinte du pneumatique ne représente que 4% de la surface totale de la bande de roulement en contact avec le sol.

L'épaisseur E1 de mélange de revêtement MR peut être, comme c'est le cas ici, sensiblement uniforme sur toute la hauteur du recouvrement et comprise entre 0.2 mm et 3 mm et encore plus préférentiellement entre 0.2 mm et 2 mm pour un pneumatique de tourisme.

Comme variante, il est possible de recouvrir les faces latérales des éléments de relief avec des compositions de caoutchouc de recouvrement différentes selon les faces latérales concernées tout en respectant un taux de noir de carbone au plus égal à 2 pce (de même, les épaisseurs moyennes peuvent être différentes selon la face considérée).

Un moyen d'obtention d'une sculpture de bande de roulement selon l'invention consiste par exemple à recouvrir une ébauche de bande de roulement réalisée dans un mélange de base avec une couche de mélange de recouvrement d'épaisseur appropriée avant de procéder au moulage de la bande de roulement et des rainures et des incisions. Après moulage, le mélange de recouvrement se trouvant sur la face de contact de la nervure peut être laissé en place ou bien éliminé par un moyen mécanique (notamment par un meulage).

La réalisation industrielle d'une bande de roulement selon l'invention peut consister à déposer, sur l'ébauche de pneumatique non vulcanisé pourvue d'une bande de roulement en mélange de base non vulcanisé, des bandelettes de mélange différent du mélange de base, comme cela est décrit dans le document de brevet EP 0510550 (les bandelettes pouvant être déposées dans la direction circonférentielle et/ou transversale sur la bande de roulement). Une autre manière peut consister à réaliser la bande de roulement par co-extrusion de deux mélanges (ou plus) au moment de l'extrusion de la bande de roulement.

L'invention appliquée dans ce qui vient d'être décrit pour une bande de roulement de pneumatique peut être aussi avantageusement appliquée à d'autres domaines comme celui des chenilles ou encore celui des chaussures et notamment celui des chaussures pour la pratique d'un sport.

**Tableau**

| Composition N° : | C-1 (MB) | C-2 (MR) |
|---|---|---|
| SBR (1) | 70 | 70 |
| BR (2) | 30 | 30 |
| noir de carbone (3) | 6 | - |
| noir de carbone (4) | - | 0.3 |
| silice (5) | 80 | 80 |
| agent de couplage (6) | 6.4 | 6.4 |
| huile (7) | 33.3 | 33.3 |
| DPG (8) | 1.5 | 1.5 |
| ZnO | 2.5 | 2.5 |
| acide stéarique | 2 | 2 |
| cire anti-ozone | 1.5 | 1.5 |
| antioxydant (9) | 1.9 | 1.9 |
| soufre | 1.1 | 1.1 |
| accélérateur (10) | 2.0 | 2.0 |

| | | |
|---|---|---|
| (1) SBR (exprimé en SBR sec) étendu avec 18% en poids (12.6 pce) d'huile (soit au total 82.6 pce de SBR étendu) ; 25% de styrène, 58% de motifs polybutadiène 1-2 et 23% de motifs polybutadiène 1-4 trans (Tg = -24°C) ; (2) BR avec 4,3% de 1-2; 2,7% de trans ; 93% de cis 1-4 (Tg = -106°C); (3) noir de carbone N234; (4) noir de carbone N772; (5) silice "Zeosil 1165MP" de la société Rhodia, type "HD" - (BET et CTAB : environ 160 m²/g); (6) agent de couplage TESPT ("Si69" de la société Degussa); (7) huile aromatique totale (y compris huile d'extension du SBR); (8) diphénylguanidine (Perkacit DPG de la société Flexsys); (9) N-1,3-diméthylbutyl-N-phénylparaphénylènediamine (Santoflex 6-PPD de la société Flexsys) ; (10) N-cyclohexyl-2-benzothiazyl-sulfénamide (Santocure CBS de la société Flexsys). | | |

## Revendications

1. - Bande de roulement en caoutchouc notamment pour pneumatique comprenant :
• une pluralité d'éléments de relief (1) comprenant des faces latérales (13, 14, 15, 16) et une face de contact (2) destinée à être en contact suivant une surface avec la chaussée pendant le roulage d'un pneumatique pourvu de ladite bande, la limite de la surface de contact de la face de contact (2) avec le sol formant au moins une arête (23, 24, 25, 26),
• une pluralité de découpures (3, 4) sous la forme de rainure et/ou incision, lesdites découpures (3, 4) étant délimitées par des faces latérales (13, 15),(14, 16) en vis-à-vis,
• chaque élément de sculpture (1) étant formé avec au moins un premier mélange de caoutchouc (dit "mélange de base"),
cette bande de roulement ayant, vue en coupe dans un plan contenant l'épaisseur de la bande, au moins une face délimitant au moins une découpure (3, 4) recouverte au moins en partie avec un deuxième mélange de caoutchouc, dit "mélange de recouvrement", cette partie en mélange de recouvrement s'étendant à l'état neuf sur une hauteur Hr au moins égale à 30% de la hauteur H de la face, au moins un premier mélange de base débouche sur la face de contact (2) à l'état neuf ou au plus tard après une usure au plus égale à 10% de la hauteur Hr, cette bande de roulement étant **caractérisée en ce que** le mélange de base a un taux de noir de carbone supérieur à 2 pce de noir et le mélange de recouvrement a un taux de noir de carbone supérieur à 0 pce et au plus égal à 2 pce.

2. - Bande de roulement selon la revendication 1 **caractérisée en ce que** le mélange de recouvrement comprend entre 0.1 et 1.0 pce de noir de carbone.

3. - Bande de roulement selon la revendication 2 **caractérisée en ce que** le mélange de recouvrement comprend entre 0.1 et 0.5 pce de noir de carbone.

4. - Bande de roulement selon l'une des revendications 1 à 3 **caractérisée en ce que** le mélange de base comprend de 5 à 20 pce de noir de carbone.

5. - Bande de roulement selon la revendication 4 **caractérisée en ce que** le mélange de base comprend de 5 à 10 pce de noir de carbone.

6. - Bande de roulement selon l'une des revendications 1 à 5 **caractérisée en ce que** l'épaisseur moyenne de mélange de recouvrement sur chaque face latérale recouverte est au plus égale à 50% de la distance moyenne séparant ladite face latérale de la face latérale du même élément de caoutchouc qu'elle délimite et qui lui est la plus proche.

7. - Bande de roulement selon l'une des revendications 1 à 6 **caractérisée en ce que** le mélange de recouvrement d'au moins une face latérale (13, 14, 15, 16) est disposé à partir de la face de contact (2) à l'état neuf.

8. - Utilisation d'une bande de roulement conforme à l'une quelconque des revendications 1 à 7, pour la fabrication ou le rechapage de pneumatiques.

9. - Pneumatique comportant une bande de roulement conforme à l'une quelconque des revendications 1 à 7.

## Claims

1. - A rubber tread in particular for tyres, comprising:
• a plurality of elements in relief (1) comprising lateral faces (13, 14, 15, 16) and a contact face (2) intended to be in contact along a surface with the roadway during travel of a tyre provided with said tread, the limit of the surface of contact of the contact face (2) with the ground forming at least one ridge (23, 24, 25, 26),
• a plurality of cutouts (3, 4) in the form of grooves and/or incisions, said cutouts (3, 4) being defined by facing lateral faces (13, 15), (14, 16),
• each tread pattern element (1) being formed with at least one first rubber mix (referred to as "base mix"),
this tread having, viewed in section in a plane containing the thickness of the tread, at least one face defining at least one cutout (3, 4) covered at least in part with a second rubber mix, referred to as "covering mix", this part consisting of covering mix extending when new over a height Hr at least equal to 30% of the height H of the face, at least one first base mix opens on to the contact face (2) when new or at the latest after wear at most equal to 10% of the height Hr, this tread being **characterised in that** the base mix has an amount of carbon black greater than 2 phr of black and the covering mix has an amount of carbon black greater than 0 phr and at most equal to 2 phr.

2. - A tread according to Claim 1, **characterised in that** the covering mix comprises between 0.1 and 1.0 phr of carbon black.

3. - A tread according to Claim 2, **characterised in that** the covering mix comprises between 0.1 and 0.5 phr of carbon black.

4. - A tread according to one of Claims 1 to 3, **characterised in that** the base mix comprises from 5 to 20 phr of carbon black.

5. - A tread according to Claim 4, **characterised in that** the base mix comprises from 5 to 10 phr of carbon black.

6. - A tread according to one of Claims 1 to 5, **characterised in that** the average thickness of covering mix on each covered lateral face is at most equal to 50% of the average distance between said lateral face and the lateral face of the same rubber element which it defines and which is closest thereto.

7. - A tread according to one of Claims 1 to 6, **characterised in that** the covering mix of at least one lateral face (13, 14, 15, 16) is arranged starting from the contact face (2) when new.

8. - The use of a tread according to any one of Claims 1 to 7 for the manufacture or retreading of tyres.

9. - A tyre comprising a tread according to any one of Claims 1 to 7.

## Patentansprüche

1. Laufstreifen aus Kautschuk, insbesondere für Luftreifen, der aufweist:
• eine Vielzahl von Reliefelementen (1) mit Seitenflächen (13, 14, 15, 16) und einer Kontaktfläche (2), die über eine Oberfläche während des Abrollens eines mit dem Laufstreifen versehenen Luftreifens mit der Fahrbahn in Kontakt kommen soll, wobei die Begrenzung der Kontaktoberfläche der Kontaktfläche (2) mit dem Boden mindestens eine Kante (23, 24, 25, 26) bildet,
• eine Vielzahl von Ausschnitten (3, 4) in Form von Rillen und/oder Einschnitten, wobei die Ausschnitte (3, 4) von Seitenflächen (13, 15), (14, 16) begrenzt werden, die gegenüberliegen,
• jedes Profilelement (1) aus mindestens einer ersten Kautschukmischung (so genannte "Grundmischung") gebildet ist,
wobei der Laufstreifen in einer Schnittansicht in einer Ebene durch die Dicke des Laufstreifens mindestens eine Fläche aufweist, die mindestens einen Ausschnitt (3, 4) begrenzt und zumindest zum Teil mit einer zweiten Kautschukmischung bedeckt ist, die als "Überzugsmischung" bezeichnet wird, wobei sich dieser Teil aus der Überzugsmischung im Neuzustand über eine Höhe Hr von zumindest 30 % der Höhe H der Fläche erstreckt, mindestens eine erste Grundmischung an der Kontaktfläche (2) im Neuzustand oder spätestens nach einer Abnutzung von höchstens 10 % der Höhe Hr an der Kontaktfläche (2) vorhanden ist, wobei der Laufstreifen **dadurch gekennzeichnet ist, dass** die Grundmischung einen Rußgehalt über 2 pce Ruß und die Überzugsmischung einen Rußgehalt über 0 pce und höchstens 2 pce aufweist.

2. Laufstreifen nach Anspruch 2, **dadurch gekennzeichnet, dass** die Überzugsmischung 0,1 bis 1,0 pce Ruß enthält.

3. Laufstreifen nach Anspruch 2, **dadurch gekennzeichnet, dass** die Überzugsmischung 0,1 bis 0,5 pce Ruß enthält.

4. Laufstreifen nach einem der Ansprüche 1 bis 3, **dadurch gekennzeichnet, dass** die Grundmischung 5 bis 20 pce Ruß enthält.

5. Laufstreifen nach Anspruch 4, **dadurch gekennzeichnet, dass** die Grundmischung 5 bis 10 pce Ruß enthält.

6. Laufstreifen nach einem der Ansprüche 1 bis 5, **dadurch gekennzeichnet, dass** die mittlere Dicke der Überzugsmischung an jeder beschichteten Seitenfläche höchstens 50 % des mittleren Abstands beträgt, der die Seitenfläche von der Seitenfläche des gleichen Kautschukelements beabstandet, das sie begrenzt und die ihr am Nächsten liegt.

7. Laufstreifen nach einem der Ansprüche 1 bis 6, **dadurch gekennzeichnet, dass** die Überzugsmischung mindestens einer Seitenfläche (13, 14, 15, 16) ab der Kontaktfläche (2) im Neuzustand angebracht ist.

8. Verwendung eines Laufstreifens nach einem der Ansprüche 1 bis 7 für die Herstellung von Luftreifen oder die Runderneuerung von Luftreifen.

9. Luftreifen, der einen Laufstreifen nach einem der Ansprüche 1 bis 7 enthält.
